# EUROPEAN PATENT APPLICATION

(11) **EP 4 723 301 A1**
(43) Date of publication of application: **08.04.2026**
(21) Application number: 23941960.9
(22) Date of filing: 21.06.2023
(51) Int. Cl.: H01M 10/615

(54) **HEATING STRUCTURE, HEATING CHAMBER AND BATTERY PRODUCTION APPARATUS**

(71) Applicant: Contemporary Amperex Technology Co., Limited, Ningde, Fujian 352100 (CN)
(72) Inventor: JIANG, Chaoqun, Ningde, Fujian 352100 (CN); BAI, Guoxi, Ningde, Fujian 352100 (CN)
(74) Representative: Kraus & Lederer PartGmbB
(86) International application number: PCT/CN2023/101928
(87) International publication number: WO 2024/259684

(57) **Abstract**

This application discloses a heating structure for heating a side plate of a battery. The heating structure includes a heating element and a heat-conducting element, where the heat-conducting element is fitted to the heating element and configured to conduct heat to the side plate of the battery. The heat-conducting element is provided with a first clearance hole capable of avoiding a protruding structure on the side plate. This application further discloses a heating bank and a battery production device.

## Description

### TECHNICAL FIELD

This application relates to the field of batteries, and in particular, to a heating structure, a heating bank, and a battery production device.

### BACKGROUND

Energy conservation and emission reduction are key to the sustainable development of the transportation industry, and electric vehicles have become an important component of the sustainable development of the transportation industry due to their advantages of energy saving and environmental protection. For electric vehicles, battery technology is an important factor concerning their development.

During battery manufacturing, it is necessary to fix a side plate to a side portion of a battery cell using glue, and then heat the side plate to cure glue. Existing heating structures are usually suitable only for a single type of side plate, resulting in low compatibility.

### SUMMARY

In view of the preceding problem, this application provides a heating structure, a heating bank, and a battery production device, so as to improve the compatibility of the heating structure and reduce battery production costs.

According to a first aspect, an embodiment of this application proposes a heating structure including: a heating element; and a heat-conducting element fitted to the heating element and configured to conduct heat to a side plate of the battery, where the heat-conducting element is provided with a first clearance hole capable of avoiding a protruding structure on the side plate.

The heating structure provided by this embodiment of this application includes a heating element and a heat-conducting element, where the heat-conducting element is provided with a first clearance hole, and the first clearance hole can accommodate and avoid the protruding structure of the side plate. Therefore, the heating structure is suitable for side plates with flat surfaces and side plates with protruding structures on the surfaces. The heating structure may be provided with several groups of first clearance holes to adapt to different types of side plates, further improving the compatibility of the heating structure. In addition, the heat-conducting element is configured to be fitted to the side plate and conduct heat between the heating element and the side plate, the heat-conducting element can adapt to a side plate of a size the same as or smaller than a size of the heat-conducting element, and the heating structure can further be compatible with side plates of various sizes. Therefore, the heating structure can heat different types of side plates, presenting high compatibility and reducing battery production costs.

In some embodiments, the heat-conducting element includes a heat-conducting plate and a washer fitted to each other, the heat-conducting plate is disposed between the heating element and the washer, and the washer is a flexible heat-conducting part; and the first clearance hole is provided at least on the washer.

In this technical solution, the heat-conducting element can maintain high heat conduction efficiency while preventing damage to the side plate due to excessive pressure. The first clearance hole may be provided only on the washer or on both the washer and the heat-conducting plate to adapt to different protruding structures.

In some embodiments, a plurality of first clearance holes are provided, and the plurality of first clearance holes include a first clearance through hole and a first clearance blind hole, where the first clearance through hole penetrates the washer and the heat-conducting plate, and the first clearance blind hole is provided at least on the washer.

With the first clearance through hole and the first clearance blind hole, the heating structure can avoid protruding structures of different heights.

In some embodiments, the washer is less than or equal to the heat-conducting plate in width, and the washer is provided with a clearance groove, where the clearance groove is recessed inward from one side of the washer, and the clearance groove can avoid the protruding structure on the side plate.

In this technical solution, an avoidance space is formed on one or two sides of the washer along its width direction.

In some embodiments, the heating element is provided with a second clearance hole communicating with the first clearance hole, and the second clearance hole is a through hole penetrating the heating element or a blind hole recessed on a side of the heating element facing the heat-conducting plate.

With the second clearance hole provided on the heating element, the second clearance hole and the first clearance hole can jointly accommodate the protruding structure on the side plate, so that the heating structure can accommodate protruding structures of a greater height, improving the compatibility.

In some embodiments, the number of the second clearance holes is less than or equal to the number of the first clearance holes.

In this technical solution, the heating structure can adapt to protruding structures of different heights while maintaining high heating efficiency.

In some embodiments, the heating structure further includes a thermal insulator, and the thermal insulator is disposed on a side of the heating element facing away from the heat-conducting element; where the thermal insulator is provided with a third clearance hole communicating with the second clearance hole, and the third clearance hole is a through hole penetrating the thermal insulator or a blind hole recessed on a side of the thermal insulator facing the heating element.

The heating structure provided by this embodiment of this application includes the thermal insulator with the third clearance hole, and the third clearance hole can also avoid the protruding structure on the side plate. In this case, the heating structure can avoid protruding structures of a greater height, further improving the compatibility.

In some embodiments, the number of the third clearance holes is less than or equal to the number of the second clearance holes. In this technical solution, the heating structure can provide the first clearance hole, the second clearance hole, and the third clearance hole depending on side plates to be heated, so that a plurality of clearance holes on the heating structure have different depths.

In some embodiments, the first clearance hole is configured to be contoured to match the protruding structure on the side plate.

In some embodiments, a shape of the first clearance hole includes at least one of circle, semicircle, ellipse, oblong, and polygon.

In this technical solution, the first clearance hole adopts a flexible shape design, as long as it can be contoured to match the protruding structure on the side plate. This prevents the heat conduction efficiency from being reduced due to oversized clearance holes.

In some embodiments, a surface of the heat-conducting element for fitting to at least part of the side plate is a heating portion, and an area of the heating portion is variable.

In this technical solution, the heating structure can heat side plates of different lengths and/or widths. The heating structure provided by this embodiment of this application can heat different types of side plates, and the area of the heating portion of the heat-conducting element is variable.

In some embodiments, the heating structure further includes a control module electrically connected to the heating element, and the control module is configured to control at least one of heating power and temperature of the heating element.

In this technical solution, the heating structure can not only be compatible with side plates of different structures, but also meet requirements for different heating temperatures and heating powers, further improving the compatibility of the heating structure.

In some embodiments, when the first clearance hole is disposed outside the heating portion, the heating element has a first unit-area heating power; and when the first clearance hole is disposed within the heating portion, the heating element has a second unit-area heating power; where the second unit-area heating power is greater than the first unit-area heating power.

In this technical solution, when the first clearance hole is disposed within the heating portion during heating, the heating rate and heating efficiency can be ensured by increasing the unit-area heating power of the heating element.

According to a second aspect, an embodiment of this application proposes a heating bank, including: a shelf; and the heating structure according to the first aspect, where the heating structure is disposed in the shelf and configured to heat and press a side plate of the battery.

For the heating bank provided by this embodiment of this application, the heating structure can be used to heat and press the side plate of the battery to cure glue in the battery. Since the heating structure is compatible with various types of side plates, the heating structure of the heating bank does not need to be frequently replaced, reducing production costs.

In some embodiments, the shelf includes a shelf body and a protective plate disposed on a side of the shelf body, and the protective plate is provided with a hollow-out hole. In this technical solution, the protective plate is provided with hollow-out holes, which can ensure uniform heat dissipation in the heating bank and prevent local overheating.

In some embodiments, a plurality of hollow-out holes are provided, and the plurality of hollow-out holes are distributed in an array or random pattern. With a plurality of hollow-out holes, rapid heat dissipation of the heating bank can be achieved.

In some embodiments, the protective plate is provided with a window and a transparent viewing panel covering the window. In this technical solution, the internal condition of the heating bank can be observed.

In some embodiments, the shelf is provided with a plurality of layers of accommodating cavities for accommodating the battery, and the plurality of layers of accommodating cavities are sequentially disposed along a height direction of the shelf. In this technical solution, the heating bank is a vertical heating bank, presenting good overall heating effects.

According to a third aspect, an embodiment of this application proposes a battery production device, including the heating bank according to the second aspect.

The foregoing description is merely an overview of the technical solutions in this application. In order to better understand the technical means in this application, to achieve implementation according to content of the specification, and to make the foregoing and other objects, features, and advantages in this application more obvious and easy to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the purposes of the preferred embodiments, and should not be construed as a limitation on this application. Moreover, throughout the accompanying drawings, the same reference signs represent the same parts. In the accompanying drawings:
FIG. 1 is a three-dimensional exploded view of a battery according to some embodiments of this application;
FIG. 2 is a schematic structural diagram of a battery module according to some embodiments of this application;
FIG. 3 is a three-dimensional exploded view of a battery cell according to some embodiments of this application;
FIG. 4 is a three-dimensional schematic diagram of a heating structure according to some embodiments of this application;
FIG. 5 is an enlarged view of portion A in the heating structure shown in FIG. 4;
FIG. 6 is an enlarged view of portion B in the heating structure shown in FIG. 4;
FIG. 7A is a schematic diagram of one heating portion in the heating structure shown in FIG. 4;
FIG. 7B is a schematic diagram of another heating portion in the heating structure shown in FIG. 4;
FIG. 8 is a diagram of a control module in a heating structure according to some embodiments of this application;
FIG. 9 is a three-dimensional schematic diagram of a heating bank according to some embodiments of this application;
FIG. 10 is a front view of the heating bank shown in FIG. 9; and
FIG. 11 is an enlarged view of portion C in the heating bank shown in FIG. 10.

Reference signs in the specific embodiments are as follows:
100: heating bank; 101: accommodating cavity;
10: heating structure; 11: heating element; 111: second clearance hole; 12: heat-conducting element; 121: heat-conducting plate; 122: washer; 1221: clearance groove; 123: first clearance hole; 123a: first clearance through hole; 123b: first clearance blind hole; 124: heating portion; 13: thermal insulator; 131: third clearance hole; 14: control module;
20: shelf; 21: shelf body; 211: inlet/outlet; 22: protective plate; 221: hollow-out hole; 222: window; 223: transparent viewing panel;
500: battery; 510: box; 511: first portion; 512: second portion; 520: battery module; 521: battery cell; 5211: housing; 5212: electrode assembly; 5213: electrode terminal; 5214: pressure relief mechanism; 522: end plate; and 523: side plate.

### DESCRIPTION OF EMBODIMENTS

The following describes in detail the embodiments of technical solutions of this application with reference to the accompanying drawings. The following embodiments are merely intended for a clearer description of the technical solutions of this application and therefore are just used as examples which do not constitute any limitations on the protection scope of this application.

Unless otherwise defined, all technical and scientific terms used herein shall have the same meanings as commonly understood by those skilled in the art to which this application belongs. The terms used herein are merely intended to describe specific embodiments, but not to limit this application. The terms "comprise", "include", and any variants thereof in the descriptions of the specification, claims, and accompanying drawings of this application are intended to cover a non-exclusive inclusion.

In the description of some embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of some embodiments of this application, "a plurality of" means at least two unless otherwise specifically stated.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment, or an independent or alternative embodiment that is exclusive of other embodiments. It is explicitly or implicitly understood by persons skilled in the art that the embodiments described herein may be combined with other embodiments.

In the description of some embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the associated objects.

In the description of some embodiments of this application, the term "a plurality of" means more than two (inclusive). Similarly, "a plurality of groups" means more than two (inclusive) groups, and "a plurality of pieces" means more than two (inclusive) pieces.

In the description of some embodiments of this application, the orientations or positional relationships indicated by the technical terms "center", "longitudinal" "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of the description of some embodiments of this application rather than indicating or implying that the apparatuses or components mentioned must have specific orientations, or must be constructed or manipulated according to specific orientations, and therefore shall not be construed as any limitations on an embodiment of this application.

In the descriptions of some embodiments of this application, unless otherwise specified and defined explicitly, the technical terms "mount", "link", "connect", and "fix" should be understood in their general senses. For example, they may refer to a fixed connection, a detachable connection, or an integrated connection; or may refer to a mechanical connection or an electrical connection; or may be a direct connection, or an indirect connection through an intermediate medium; or may be an internal connection between two components or an interactive relationship between two components. Persons of ordinary skill in the art can understand specific meanings of these terms in the embodiments of this application as appropriate to specific situations.

During battery manufacturing, it is necessary to fix a side plate to a side portion of a battery cell using glue, and then heat the side plate to cure glue. Existing heating structures are usually suitable only for a single type of side plate, resulting in low compatibility.

Through research, it is found that the heating structure is fitted to the side plate to heat the side plate. Different types of side plates may be in different shapes. For example, some side plates have flat outer surfaces, while some side plates have protruding structures on the surfaces, so a conventional heating structure cannot be applied to side plates of different structures.

In view of this, this application provides a heating structure, a heating bank, and a battery production device. The heating structure is configured to heat a side plate of a battery. The heating structure includes a heating element and a heat-conducting element, and the heat-conducting element is fitted to the heating element and configured to conduct heat to the side plate of the battery, where the heat-conducting element is provided with a first clearance hole capable of avoiding a protruding structure on the side plate. In this way, the protruding structure on the side plate can be accommodated in the first clearance hole, and the rest of the side plate can be fitted to the heat-conducting element, so that the heating structure can heat the side plate without affecting heating efficiency. This heating structure can heat both side plates with flat surfaces and side plates with protruding structures on the surfaces, presenting high compatibility. The position, shape, and size of the first clearance hole can be set according to side plates to be heated, further enhancing the compatibility of the heating structure.

The heating structure provided by an embodiment of this application is configured to heat a side plate of a battery. The heating structure disclosed in this embodiment of this application can be used in heating and standing of a battery and other processes requiring heating of the battery. Before standing and heat curing of the battery, glue is applied to battery cells and then all battery cells are adhered to a fixed structure including the side plate by using glue. The heating structure is used to heat glue so that glue can be heat-cured to adhere the fixed structure to the battery cell.

The battery can be used in various electric apparatuses. The electric apparatus may be but is not limited to a mobile phone, a tablet computer, a laptop computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like. Assuming that the electric apparatus is a vehicle, the battery can be used as not only an operational power supply for the vehicle but also a driving power supply for the vehicle, replacing all or part of the fossil fuel or natural gas to provide driving power for the vehicle.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent to some extent a liquid or another foreign matter from affecting charging or discharging of the battery cell.

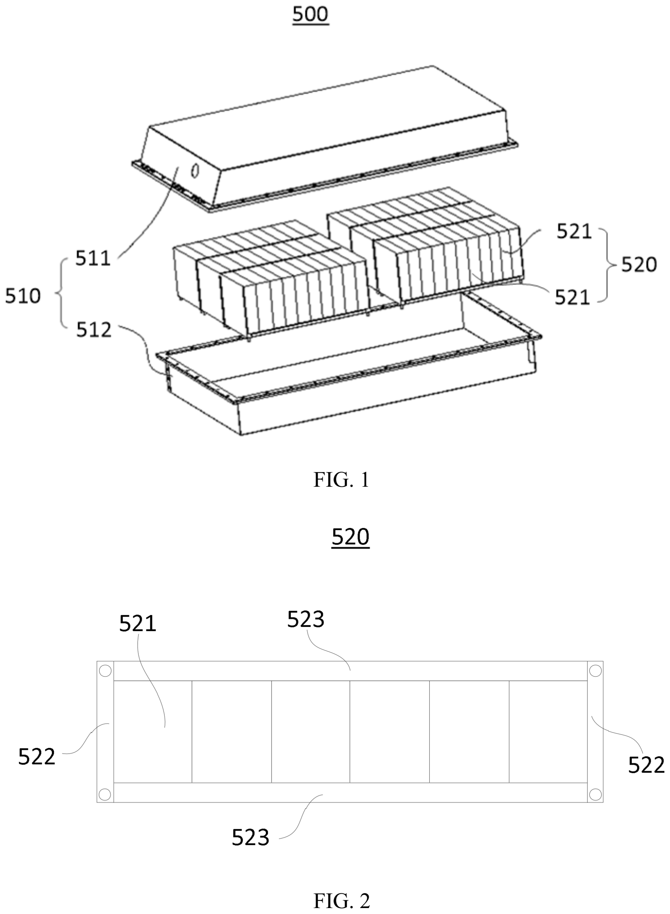

Referring to FIG. 1, FIG. 1 is a three-dimensional exploded view of a battery according to some embodiments of this application. A battery 500 includes a box 510 and a battery cell 521, and the battery cell 521 is accommodated in the box 510. The box 510 is configured to provide an accommodating space for the battery cell 521, and the box 510 may be of various structures. In some embodiments, the box 510 may include a first portion 511 and a second portion 512, where the first portion 511 and the second portion 512 cover each other, and the first portion 511 and the second portion 512 jointly define an accommodating space for accommodating the battery cell 521. The second portion 512 may be a hollow structure with one side open, and the first portion 511 may be a plate structure. The first portion 511 covers the open side of the second portion 512, so that the first portion 511 and the second portion 512 jointly define an accommodating space. Alternatively, both the first portion 511 and the second portion 512 may be a hollow structure with one side open, and the open side of the first portion 511 covers the open side of the second portion 512. Certainly, the box 510 formed by the first portion 511 and the second portion 512 may be in various shapes, such as a cylinder and a cuboid.

The battery 500 may have a plurality of battery cells 521, and the plurality of battery cells 521 may be connected in series, parallel, or series-parallel, a series-parallel connection refers to a combination of series and parallel connections among the plurality of battery cells 521. The plurality of battery cells 521 may be directly connected in series, parallel, or series-parallel, and then an entirety of the plurality of battery cells 521 is accommodated in the box 510. Alternatively, the battery 500 may be obtained by accommodating in the box 510 a plurality of battery modules 520 connected in series, parallel, or series-parallel, where each of the battery modules 520 is formed by connecting a plurality of battery cells 521 in series, parallel, or series-parallel. The battery 500 may further include another structure. For example, the battery 500 may further include a busbar for implementing an electrical connection between the plurality of battery cells 521.

Referring to FIG. 2, in some embodiments, the battery module 520 includes a plurality of battery cells 521, end plates 522, and side plates 523. The battery cells 521 are secondary batteries that can be recharged repeatedly. There are two end plates 522 and two side plates 523 forming a rectangular frame, and the plurality of battery cells 521 are arranged in the frame. An end portion of the end plate 522 and an end portion of the side plate 523 can be permanently connected by welding or gluing, or using a fastener such as a bolt or rivet. The side plate 523 and the end plate 522 may be made of metal such as aluminum, or alloy such as aluminum alloy, and the side plate 523 and the end plate 522 may be integrated for high structural strength and high load-bearing stress performance. The plurality of battery cells 521 may be electrically connected in series, parallel, or series-parallel. Glue is applied to wide surfaces of two adjacent battery cells 521 in a battery module 21, and the wide surfaces of two adjacent battery cells 521 are permanently connected using glue. Glue is applied between a narrow surface of each battery cell 521 and the side plate 523, and the narrow surface of each battery cell 521 and the side plate 523 are permanently connected using glue.

Each battery cell 521 may be but is not limited to a secondary battery or a primary battery, a lithium-sulfur battery, a sodium-ion battery, or a magnesium-ion battery. The battery cell 521 may be cylindrical, flat, cuboid, or of other shapes.

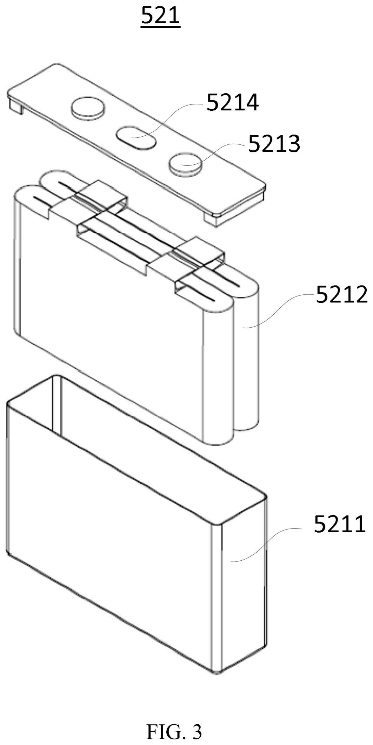

Referring to FIG. 3, a battery cell 521 is the smallest unit forming a battery. The battery cell 521 includes a housing 5211, an electrode assembly 5212, and an electrolyte, and both the electrode assembly 5212 and the electrolyte are accommodated in the housing 5211. The housing 5211 may include a housing body with an opening and an end cover, and the end cover covers the opening of the housing body to isolate the internal environment of the battery cell from the external environment. The end cover may be provided with a functional component such as an electrode terminal 5213, and may further be provided with a pressure relief mechanism 5214 for relieving internal pressure when the internal pressure or temperature of the battery cell 521 reaches a threshold. The housing 5211 may be in various shapes and sizes, such as cuboid, cylinder, and hexagonal prism. The housing 5211 may be made of various materials, including but not limited to copper, iron, aluminum, stainless steel, and aluminum alloy.

The electrode assembly 5212 is a component in the battery cell 521 where electrochemical reactions occur. The housing 5211 may contain one or more electrode assemblies 5212.

During assembly of the battery module 21, glue is applied to the wide and narrow surfaces of the battery cell 521, and then the battery cells 521 are arranged in the frame enclosed by the side plates 523 and the end plates 522, so that the wide surfaces of the battery cells 521 are adhered by glue, and the narrow surfaces of the battery cells 521 and the side plates 523 are adhered by glue. After the battery module is assembled, it is conveyed to a heating station for heating to accelerate glue curing.

An embodiment according to the first aspect of this application proposes a heating structure for heating a side plate 523 of a battery. The side plate 523 of the battery in this embodiment of this application is configured to be fixed to a battery cell 521, and the side plate 523 of the battery may be the side plate 523 provided in a battery module 520 or the side plate provided directly in a box 510 of the battery.

Referring to FIG. 1 to FIG. 4, the heating structure 10 includes a heating element 11 and a heat-conducting element 12, the heat-conducting element 12 is fitted to the heating element 11, and the heat-conducting element 12 is configured to conduct heat to the side plate 523 of the battery, where the heat-conducting element 12 is provided with a first clearance hole 123 capable of avoiding a protruding structure on the side plate 523.

The heating element 11 is a device that can be energized to heat up, the heating element 11 may be plate-shaped, and an electric heating element is provided inside the heating element 11. For example, the electric heating element is a heating chip, a heating wire, or the like.

The heat-conducting element 12 is used for conducting heat, one side of the heat-conducting element 12 is fitted to the heating element 11, and another side is fitted to a side plate 523 to be heated. The heat-conducting element 12 may adopt a material with high thermal conductivity, and the heat-conducting element 12 may also be plate-shaped to facilitate fitting to the side plate 523.

The heat-conducting element 12 is provided with a first clearance hole 123 capable of avoiding the protruding structure on the side plate 523. That is, the first clearance hole 123 can accommodate the protruding structure or allow the protruding structure to pass through, so that the rest of the side plate 523 can be fitted to the heat-conducting element 12. The protruding structure of the side plate 523 may be a structure such as a rivet and a water-cooling, or another structure protruding from the surface of the side plate 523.

There may be one or more first clearance holes 123, and the number and shape of the first clearance hole 123 are determined as contoured to match at least one side plate 523 to be fitted to, so that the heating structure 10 can be fitted to heat the side plate 523. It can be understood that a plurality of groups of first clearance holes 123 may be designed, each group of first clearance holes 123 can adapt to one type of side plate 523. With the plurality of groups of first clearance holes 123, the heating structure 10 can heat various types of side plates 523. The type of the side plate 523 depends on a blueprint, and the blueprint is the design template of the side plate 523. For battery modules of different models, if the side plates 523 of the same blueprint are used, it can be understood as using the same type of side plate 523.

The heating structure 10 provided by this embodiment of this application includes the heating element 11 and the heat-conducting element 12, where the heat-conducting element 12 is provided with the first clearance hole 123, and the first clearance hole 123 can accommodate and avoid the protruding structure of the side plate 523. Therefore, the heating structure 10 is suitable for side plates 523 with flat surfaces and side plates 523 with protruding structures on the surfaces. The heating structure 10 may be provided with a plurality of groups of first clearance holes 123 to adapt to different types of side plates 523, further improving the compatibility of the heating structure 10. In addition, the heat-conducting element 12 is configured to be fitted to the side plate 523 and conduct heat between the heating element 11 and the side plate 523. The heat-conducting element 12 can adapt to a side plate 523 of a size the same as or smaller than a size of the heat-conducting element 12, and the heating structure 10 can further be compatible with side plates 523 of various sizes. Therefore, the heating structure 10 can heat different types of side plates 523, presenting high compatibility and reducing battery production costs.

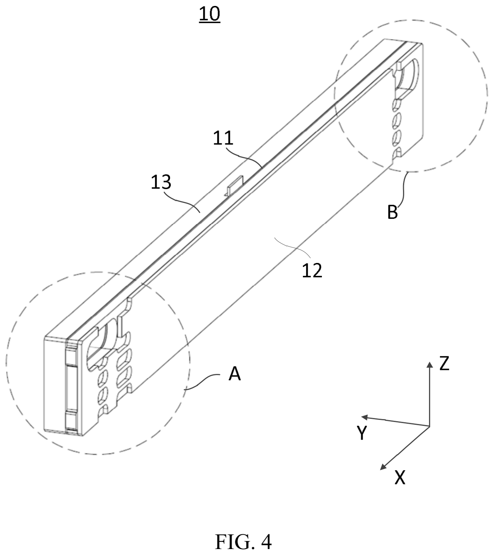

Referring to FIG. 4 to FIG. 6, in some embodiments, the heat-conducting element 12 includes a heat-conducting plate 121 and a washer 122 fitted to each other, the heat-conducting plate 121 is disposed between the heating element 11 and the washer 122, and the washer 122 is a flexible heat-conducting part; and the first clearance hole 123 is provided at least on the washer 122.

Both the heat-conducting plate 121 and the washer 122 are used for conducting heat. Optionally, the heat-conducting plate 121 is in the shape of a rectangular plate, and the washer 122 is in the shape of a rectangular sheet, for adapting to the shape of the side plate 523. The heat-conducting plate 121 adopts a material with high thermal conductivity. For example, the heat-conducting plate 121 may be made of aluminum, copper, or the like.

The washer 122 is a flexible heat-conducting part. When the heating structure 10 is fitted to the side plate 523, the washer 122 can serve as a buffer. In some embodiments, the washer 122 may be made of silicone. In other embodiments, the washer 122 may alternatively be omitted.

The first clearance hole 123 is provided at least on the washer 122. That is, the first clearance hole 123 may be provided only on the washer 122 or may be provided on both the washer 122 and the heat-conducting plate 121, for adapting to the protruding structure on the side plate 523. It can be understood that if the protruding structure is high, the first clearance hole 123 may be provided on both the washer 122 and the heat-conducting plate 121; if the protruding structure is low, the first clearance hole 123 may alternatively be provided on the washer 122 only.

In this technical solution, the heat-conducting element 12 includes the heat-conducting plate 121 and the washer 122. The heat-conducting element 12 can maintain high heat conduction efficiency while preventing damage to the side plate 523 due to excessive pressure. The first clearance hole 123 may be provided only on the washer 122 or on both the washer 122 and the heat-conducting plate 121, for adapting to different protruding structures.

In some embodiments, a plurality of first clearance holes 123 are provided, and the plurality of first clearance holes 123 include a first clearance through hole 123a and a first clearance blind hole 123b, where the first clearance through hole 123a penetrates the washer 122 and the heat-conducting plate 121, and the first clearance blind hole 123b is provided at least on the washer 122.

Optionally, the heat-conducting plate 121 is greater than the washer 122 in thickness. For example, the thickness of the heat-conducting plate 121 is greater than or equal to twice the thickness of the washer 122.

The first clearance through hole 123a penetrates both the washer 122 and the heat-conducting plate 121. The position and shape of the first clearance through hole 123a may be determined as contoured to match at least one side plate 523 to be heated. For example, as shown in FIG. 4 to FIG. 6, two first clearance through holes 123a are provided, and the two first clearance through holes 123a are provided on two sides of the heating structure 10 respectively along its length direction (X direction).

Optionally, the first clearance blind hole 123b is provided only on the washer 122, so that the position on the heat-conducting plate 121 corresponding to the first clearance blind hole 123b does not need to be perforated. In this case, a larger heat-conducting area can be retained. The first clearance blind hole 123b may also penetrate the washer 122 and part of the heat-conducting plate 121. That is, the first clearance blind hole 123b does not penetrate the heat-conducting plate 121. The position and shape of the first clearance blind hole 123b may be determined as contoured to match at least one side plate 523 to be heated. For example, as shown in FIG. 4 to FIG. 6, a plurality of first clearance blind holes 123b are provided on two sides of the heating structure 10 along its length direction (X direction), and the plurality of first clearance blind holes 123b may be arranged along a height direction (Z direction) of the heating structure 10.

With the first clearance through hole 123a and the first clearance blind hole 123b, the heating structure 10 can avoid protruding structures of different heights.

In some embodiments, the washer 122 is less than or equal to the heat-conducting plate 121 in width, and the washer 122 is provided with a clearance groove 1221, where the clearance groove 1221 is recessed inward from one edge of the washer 122, and the clearance groove 1221 can avoid the protruding structure on the side plate 523.

The width direction of the washer 122 is the Z direction shown in FIG. 4. In this embodiment, the width of the washer 122 is substantially the same as the width of the heat-conducting plate 121. In other embodiments, the washer 122 may be less than the heat-conducting plate 121 in width, so that an avoidance space is formed on one or two sides of the washer 122 along its width direction.

The washer 122 is provided with a clearance groove 1221, there may be one or more clearance grooves 1221, and the clearance groove 1221 may be provided on one or two sides of the washer 122 along its width direction. Since some protruding structures on the side plate 523 are located at an edge of the side plate 523, the clearance grooves 1221 disposed on the sides of the washer 122 along its width direction can adapt to and avoid the protruding structures. In other embodiments, the clearance groove 1221 may alternatively be provided on a side of the washer 122 along its length direction.

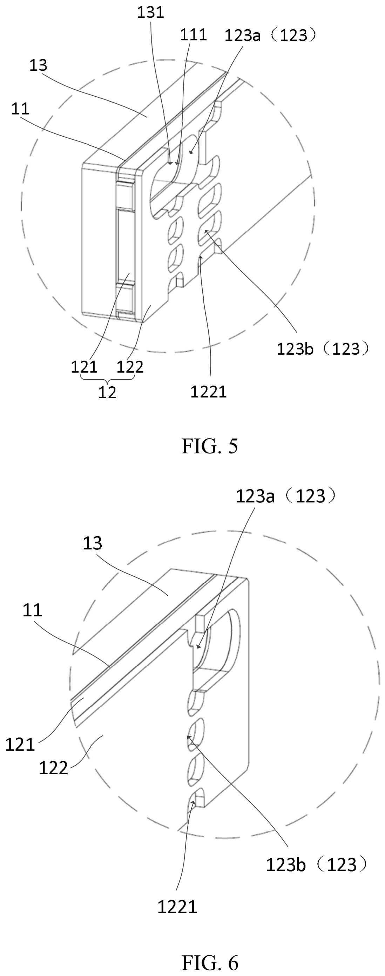

As shown in FIG. 5, in some embodiments, the heating element 11 is provided with a second clearance hole 111 communicating with the first clearance hole 123, and the second clearance hole 111 is a through hole penetrating the heating element 11 or a blind hole recessed on a side of the heating element 11 facing the heat-conducting plate 121.

In this embodiment, the second clearance hole 111 is a through hole, the second clearance hole 111 and the first clearance hole 123 communicate and have the same shape, and the first clearance hole 123 and the second clearance hole 111 can jointly accommodate the protruding structure on the side plate 523. Projections of the second clearance hole 111 and the first clearance hole 123 on the heating element 11 completely overlap. In other embodiments, the second clearance hole 111 may alternatively be different from the first clearance hole 123 in shape and size. In other embodiments, the second clearance hole 111 may alternatively be a blind hole.

With the second clearance hole 111 provided on the heating element 11, the second clearance hole 111 and the first clearance hole 123 can jointly accommodate the protruding structure on the side plate 523, so that the heating structure 10 can accommodate protruding structures of a greater height, improving the compatibility.

In some embodiments, the number of the second clearance holes 111 is less than or equal to the number of the first clearance holes 123.

For example, in this embodiment, two second clearance holes 111 are provided on two sides of the heating element 11 respectively along its length direction. Since the heat-conducting element 12 is fitted to the side plate 523, the number of the first clearance holes 123 needs to be greater than or equal to the number of the first clearance holes 123. If the first clearance hole 123 is deep enough to accommodate the protruding structure, it is unnecessary to provide the second clearance hole 111 at a position corresponding to the first clearance hole 123. That is, it is unnecessary to provide a hole at the corresponding position on the heating element 11, maintaining the heating efficiency of the heating element 11.

In this technical solution, the heating structure 10 can adapt to protruding structures of different heights while maintaining high heating efficiency.

Still referring to FIG. 4 to FIG. 6, in some embodiments, the heating structure 10 further includes a thermal insulator 13, and the thermal insulator 13 is disposed on a side of the heating element 11 facing away from the heat-conducting element 12, where the thermal insulator 13 is provided with a third clearance hole 131 communicating with the second clearance hole 111, and the third clearance hole 131 is a through hole penetrating the thermal insulator 13 or a blind hole recessed on a side of the thermal insulator 13 facing the heating element 11.

The thermal insulator 13, the heating element 11, and the heat-conducting element 12 are permanently connected, and the thermal insulator 13 provides a base for mounting the heating element 11 and the heat-conducting element 12. For example, the thermal insulator 13 is fixed to a mounting shelf 20, and the heating element 11 and the heat-conducting element 12 are disposed on a side of the thermal insulator 13 facing away from the mounting shelf 20. Optionally, the mounting shelf 20 can move to drive the heating structure 10 towards or away from the side plate 523 to be heated.

The thermal insulator 13 may be a fiberglass board or another component capable of heat insulation, and the thermal insulator 13 is disposed on a side of the heating element 11 facing away from the heat-conducting element 12. Therefore, the thermal insulator 13 can prevent heat on the heating element 11 from dissipating through the thermal insulator 13 and maintain the heating efficiency. The thermal insulator 13 may be plate-shaped. In some embodiments, the thermal insulator 13, the heating element 11, and the heat-conducting element 12 are all in the shape of a rectangular plate. The thermal insulator 13, the heating element 11, and the heat-conducting plate 121 may be permanently connected by fasteners such as screws, and the washer 122 is adhered to the heat-conducting plate 121.

The thermal insulator 13 is provided with a third clearance hole 131 communicating with the second clearance hole 111. That is, the third clearance hole 131 corresponds to and communicates with the second clearance hole 111 and the first clearance hole 123, so that the third clearance hole 131 can also achieve the avoidance purpose. Optionally, the first clearance hole 123, the second clearance hole 111, and the third clearance hole 131 have the same shape, and their projections on the thermal insulator 13 overlap.

In this embodiment, the third clearance hole 131 is a through hole, and the protruding structure on the side plate 523 can pass through the first clearance hole 123, the second clearance hole 111, and the third clearance hole 131. Even if the height of the protruding structure on the side plate 523 is greater than the thickness of the heating structure 10, the rest of the side plate 523 can still be fitted to the heating structure 10.

The third clearance hole 131 may alternatively be a blind hole. In this case, the third clearance hole 131, the second clearance hole 111, and the first clearance hole 123 jointly accommodate the protruding structure.

The heating structure 10 provided by this embodiment of this application includes the thermal insulator 13, the thermal insulator 13 is provided with the third clearance hole 131, and the third clearance hole 131 can also avoid the protruding structure on the side plate 523, so that the heating structure 10 can avoid protruding structures of a greater height, further improving the compatibility.

In some embodiments, the number of the third clearance holes 131 is less than or equal to the number of the second clearance holes 111.

For example, two third clearance holes 131 are provided on two sides of the heating structure 10 respectively along its length direction, and the number of the second clearance holes 111 is equal to the number of the third clearance holes 131. In other embodiments, if the thickness of the protruding structure is less than or equal to the depth of the first clearance hole 123 and the second clearance hole 111, the third clearance hole 131 can be omitted, so that the number of the third clearance holes 131 is less than the number of the second clearance holes 111.

In this technical solution, the heating structure 10 can be provided with the first clearance hole 123, the second clearance hole 111, and the third clearance hole 131 depending on side plates 523 to be heated, so that a plurality of clearance holes on the heating structure 10 have different depths.

In some embodiments, the heat-conducting element 12 is contoured to match a surface of the side plate 523 to be fitted to, and the first clearance hole 123 is contoured to match the protruding structure on the side plate 523.

For example, if the surface of the side plate 523 for fitting to the heat-conducting element 12 is provided with a protruding structure, the first clearance hole 123 on the heat-conducting element 12 is contoured to match the protruding structure. To enable the heating structure 10 to heat various types of side plates 523, the heat-conducting element 12 needs to be contoured to match the surfaces of various side plates 523. That is, a plurality of groups of first clearance holes 123 are provided for the heat-conducting element 12, and each group of first clearance holes 123 is used for being contoured to match at least one side plate 523.

In some embodiments, a shape of the first clearance hole 123 includes at least one of circle, semicircle, ellipse, oblong, and polygonal. That is, the shape of each first clearance hole 123 may include only one of these shapes or at least two of these shapes. For example, the first clearance hole 123 includes two communicating sub-holes of different shapes. A polygon is, for example, a triangle, a rectangle, a trapezoid, a pentagon, a hexagon, or the like. In this technical solution, the first clearance hole 123 adopts a flexible shape design, as long as it can be contoured to match the protruding structure on the side plate 523. This prevents the heat conduction efficiency from being reduced due to oversized clearance holes.

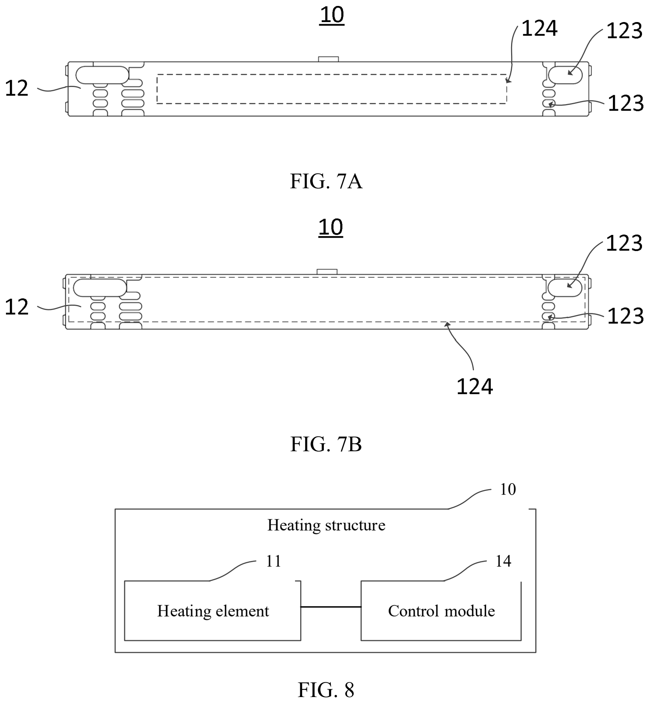

Referring to FIG. 7A and FIG. 7B, in some embodiments, a surface of the heat-conducting element 12 for fitting to at least part of the side plate 523 is a heating portion 124, and an area of the heating portion 124 is variable. For example, the area of the heating portion 124 shown in FIG. 7A is smaller than the area of the heating portion 124 shown in FIG. 7B.

Since the heating structure 10 can heat various types of side plates 523, in different application scenarios, the area where the heat-conducting element 12 is fitted to the side plate 523 is different, that is, the area of the heating portion 124 is variable. The area of the heating portion 124 is the area of a projection of the heat-conducting element 12 on the side plate 523.

The heating structure 10 can heat side plates 523 of different lengths and/or widths. The heating structure 10 provided by this embodiment of this application can heat different types of side plates 523, and the area of the heating portion 124 of the heat-conducting element 12 is variable.

In some embodiments, the heating structure 10 further includes a control module 14 electrically connected to the heating element 11, and the control module 14 is configured to control at least one of heating power and temperature of the heating element 11.

The control module 14 can control the heating power of the heating element 11. Optionally, the control module 14 can control the heating power of the heating element 11 according to the area of the heating portion 124. The control module 14 can further control the temperature of the heating element 11 to meet different heating temperature requirements of the battery. The control module 14 may include a temperature sensor or the like, and the temperature sensor is used for detecting the temperature of the heating element 11.

In this technical solution, the heating structure 10 can not only be compatible with side plates 523 of different structures, but also meet requirements for different heating temperatures and heating powers, further improving the compatibility of the heating structure 10.

In some embodiments, when the first clearance hole 123 is disposed outside the heating portion 124, the heating element 11 has a first unit-area heating power; and when the first clearance hole 123 is disposed within the heating portion 124, the heating element 11 has a second unit-area heating power; where the second unit-area heating power is greater than the first unit-area heating power.

For example, as shown in FIG. 7A, all first clearance holes 123 are disposed outside the heating portion 124. As shown in FIG. 7B, a plurality of first clearance holes 123 are disposed within the heating portion 124. Since the first clearance hole 123 is provided in the heating portion 124, the heating area of the heating structure 10 is changed, affecting the heating effects. Therefore, when the first clearance hole 123 is disposed within the heating portion 124 during heating, the heating rate and heating efficiency can be ensured by increasing the unit-area heating power of the heating element 11.

Referring to FIG. 2 to FIG. 8, an embodiment of this application provides a heating structure 10 for heating a side plate 523 of a battery. The heating structure 10 includes a thermal insulator 13, a heating element 11, and a heat-conducting element 12 fitted in sequence. The heat-conducting element 12 is provided with a first clearance hole 123 capable of avoiding a protruding structure on the side plate 523, where the heat-conducting element 12 includes a heat-conducting plate 121 and a washer 122 fitted to each other, the first clearance hole 123 is provided at least on the washer 122, and the first clearance hole 123 is contoured to match the protruding structure on the side plate 523. The heating element 11 is provided with a second clearance hole 111 communicating with the first clearance hole 123, and the second clearance hole 111 is a through hole or a blind hole. The thermal insulator 13 is provided with a third clearance hole 131 communicating with the second clearance hole 111, and the third clearance hole 131 is a through hole or a blind hole.

Referring to FIG. 4 to FIG. 9, an embodiment according to the second aspect of this application proposes a heating bank 100, including a shelf 20 and the heating structure 10 according to the first aspect, where the heating structure 10 is disposed in the shelf 20 and configured to heat and press a side plate 523 of the battery.

The heating bank 100 can be used for heating and standing of a battery. The shelf 20 is used for holding one or more batteries, and the heating structure 10 is used for heating and pressing the side plate 523 of the battery. A plurality of heating structures 10 may be provided in the heating bank 100, where a pair of heating structures 10 are configured to heat and press side plates 523 on two sides of the battery.

The heating bank 100 provided by this embodiment of this application can use the heating structure 10 to heat and press the side plate 523 of the battery, so as to cure glue in the battery. Since the heating structure 10 is compatible with various types of side plates 523, the heating structure 10 of the heating bank does not need to be frequently replaced, reducing production costs.

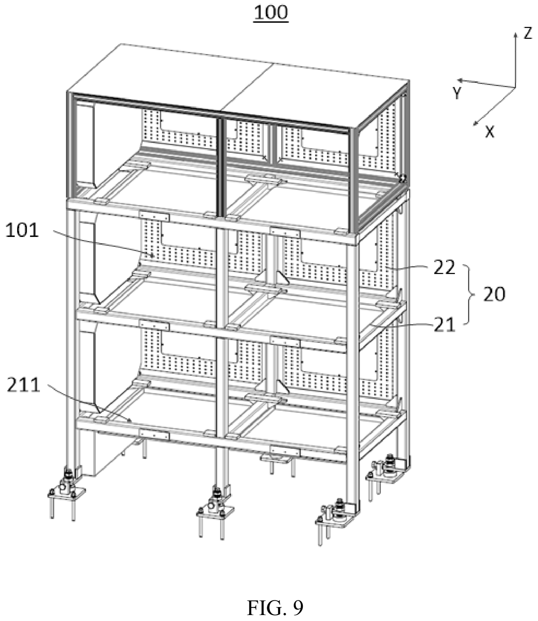

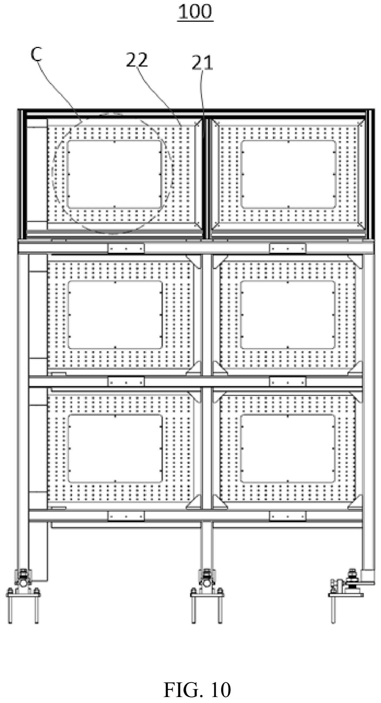

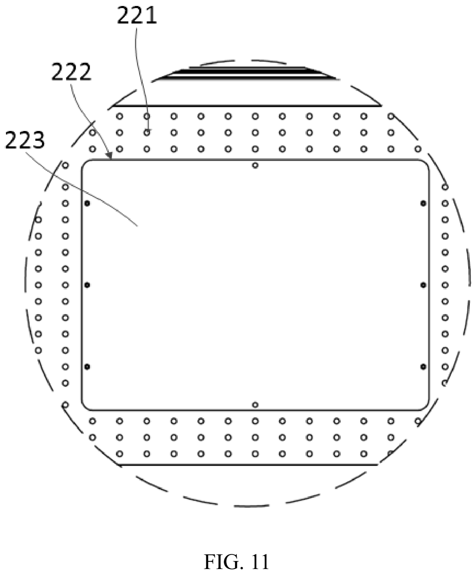

Referring to FIG. 9 to FIG. 11, in some embodiments, the shelf 20 includes a shelf body 21 and a protective plate 22 disposed on a side of the shelf body, and the protective plate 22 is provided with a hollow-out hole 221.

The protective plate 22 is disposed on a side of the shelf body 21, so that a high temperature can be achieved in the shelf body 21, helping heat the entire battery. The side of the shelf 20 facing away from the protective plate 22 may be an inlet/outlet 211 for battery feeding and discharging.

The protective plate 22 may be a sheet metal plate, and the hollow-out hole 221 is easy to manufacture. The protective plate 22 may alternatively be made of other materials such as plastic.

In this technical solution, the protective plate 22 is provided with hollow-out holes 221, which can ensure uniform heat dissipation in the heating bank and prevent local overheating.

In some embodiments, a plurality of hollow-out holes 221 are provided, and the plurality of hollow-out holes 221 are distributed in an array or random pattern. With a plurality of hollow-out holes 211, rapid heat dissipation of the heating bank 100 can be achieved.

In some embodiments, the protective plate 22 is provided with a window 222 and a transparent viewing panel 223 covering the window 222. The transparent viewing panel 223 may be an acrylic plate or other transparent plates. In this technical solution, the internal condition of the heating bank can be observed.

In some embodiments, the shelf 20 is provided with a plurality of layers of accommodating cavities 101 for accommodating batteries, and the plurality of layers of accommodating cavities 101 are sequentially disposed along a height direction (Z direction shown in FIG. 9) of the shelf 20. For example, in this embodiment, there are three layers of accommodating cavities in the shelf 20, and each layer has two accommodating cavities 101, and a heating structure 10 is disposed on two sides of each accommodating cavity 101. A transparent viewing panel 223 may be provided in the middle of each accommodating cavity 101. In this technical solution, the heating bank 100 is a vertical heating bank, presenting good overall heating effects.

An embodiment according to the third aspect of this application proposes a battery production device, including the heating bank 100 according to the second aspect.

The battery production device may further include a plurality of apparatuses used in the battery production process, such as an electrode pate production apparatus and a gluing apparatus.

In conclusion, it should be noted that the foregoing embodiments are for description of the technical solutions in this application only, rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the technical features mentioned in the embodiments can be combined in any manner. This application is not limited to the specific embodiments disclosed herein, but includes all technical solutions falling within the scope of the claims.

## Claims

1. A heating structure for heating a side plate of a battery, **characterized in that** the heating structure comprises:
a heating element; and
a heat-conducting element fitted to the heating element and configured to conduct heat to the side plate of the battery, wherein the heat-conducting element is provided with a first clearance hole capable of avoiding a protruding structure on the side plate.

2. The heating structure according to claim 1, **characterized in that** the heat-conducting element comprises a heat-conducting plate and a washer fitted to each other, the heat-conducting plate is disposed between the heating element and the washer, and the washer is a flexible heat-conducting part; and
the first clearance hole is provided at least on the washer.

3. The heating structure according to claim 2, **characterized in that** a plurality of first clearance holes are provided, and the plurality of first clearance holes comprise a first clearance through hole and a first clearance blind hole, wherein the first clearance through hole penetrates the washer and the heat-conducting plate, and the first clearance blind hole is provided at least on the washer.

4. The heating structure according to claim 2, **characterized in that** the washer is less than or equal to the heat-conducting plate in width, and the washer is provided with a clearance groove, wherein the clearance groove is recessed inward from one side of the washer, and the clearance groove can avoid the protruding structure on the side plate.

5. The heating structure according to any one of claims 1 to 4, **characterized in that** the heating element is provided with a second clearance hole communicating with the first clearance hole, and the second clearance hole is a through hole penetrating the heating element or a blind hole recessed on a side of the heating element facing the heat-conducting plate.

6. The heating structure according to claim 5, **characterized in that** the number of the second clearance holes is less than or equal to the number of the first clearance holes.

7. The heating structure according to claim 5 or 6, **characterized in that** the heating structure further comprises a thermal insulator, and the thermal insulator is disposed on a side of the heating element facing away from the heat-conducting element; wherein
the thermal insulator is provided with a third clearance hole communicating with the second clearance hole, and the third clearance hole is a through hole penetrating the thermal insulator or a blind hole recessed on a side of the thermal insulator facing the heating element.

8. The heating structure according to claim 7, **characterized in that** the number of the third clearance holes is less than or equal to the number of the second clearance holes.

9. The heating structure according to any one of claims 1 to 8, **characterized in that** the first clearance hole is contoured to fit the protruding structure on the side plate.

10. The heating structure according to any one of claims 1 to 9, **characterized in that** a shape of the first clearance hole comprises at least one of circle, semicircle, ellipse, oblong, and polygon.

11. The heating structure according to any one of claims 1 to 10, **characterized in that** a surface of the heat-conducting element for fitting to at least part of the side plate is a heating portion, and an area of the heating portion is variable.

12. The heating structure according to claim 11, **characterized in that** the heating structure further comprises a control module electrically connected to the heating element, and the control module is configured to control at least one of heating power and temperature of the heating element.

13. The heating structure according to claim 11 or 12, **characterized in that**:
when the first clearance hole is disposed outside the heating portion, the heating element has a first unit-area heating power; and
when the first clearance hole is disposed within the heating portion, the heating element has a second unit-area heating power; wherein
the second unit-area heating power is greater than the first unit-area heating power.

14. A heating bank, **characterized by** comprising:
a shelf; and
the heating structure according to any one of claims 1 to 13, wherein the heating structure is disposed in the shelf and configured to heat and press a side plate of the battery.

15. The heating bank according to claim 14, **characterized in that** the shelf comprises a shelf body and a protective plate disposed on a side of the shelf body, and the protective plate is provided with a hollow-out hole.

16. The heating bank according to claim 15, **characterized in that** a plurality of hollow-out holes are provided, and the plurality of hollow-out holes are distributed in an array or random pattern.

17. The heating bank according to claim 14, **characterized in that** the protective plate is provided with a window and a transparent viewing panel covering the window.

18. The heating bank according to any one of claims 14 to 17, **characterized in that** the shelf is provided with a plurality of layers of accommodating cavities for accommodating the batteries, and the plurality of layers of accommodating cavities are sequentially disposed along a height direction of the shelf.

19. A battery production device, **characterized by** comprising the heating bank according to any one of claims 14 to 18.
